# EUROPEAN PATENT APPLICATION

(11) **EP 3 961 782 A1**
(43) Date of publication of application: **02.03.2022**
(21) Application number: 21193419.5
(22) Date of filing: 27.08.2021
(51) Int. Cl.: H01M 10/056, H01M 10/0562, H01M 10/0565, H01M 10/052, H01M 10/0525, H01M 4/38, H01M 4/40, H01M 4/587, H01M 10/42

(54) **ALL-SOLID SECONDARY BATTERY**

(30) Priority: 28.08.2020 KR 20200109484
(71) Applicant: Samsung SDI Co., Ltd., Yongin-si, Gyeonggi-do 17084 (KR)
(72) Inventor: Lee, Minsuk, Yongin-si, Gyeonggi-do 17084 (KR); Kim, Hongjeong, Yongin-si, Gyeonggi-do 17084 (KR); Ryu, Younggyoon, Yongin-si, Gyeonggi-do 17084 (KR); Suh, Kwangjong, Yongin-si, Gyeonggi-do 17084 (KR); Yoon, Jaegu, Yongin-si, Gyeonggi-do 17084 (KR)
(74) Representative: Gulde & Partner

(57) **Abstract**

An all-solid secondary battery includes: a cathode layer; an anode layer; a first solid electrolyte layer adjacent to the cathode layer; and a second solid electrolyte layer adjacent to the anode layer. The cathode layer includes a cathode current collector and a cathode active material layer on the cathode current collector. The anode layer includes an anode current collector and a first anode active material layer or a third anode active material layer on the anode current collector. A composite solid electrolyte and an insulating member are located between the first solid electrolyte layer and the second solid electrolyte layer, wherein the composite solid electrolyte is on a central portion of the second solid electrolyte layer and includes an ion conductor and a lithium salt, and the insulating member is on peripheral portions of the second solid electrolyte layer and is around outer surfaces of the composite solid electrolyte.

## Description

### BACKGROUND

### 1. Field

One or more aspects of embodiments of the present disclosure relate to an all-solid secondary battery.

### 2. Description of the Related Art

In recent years, batteries having improved energy density and high safety have been actively developed in accordance with industrial demand. For example, lithium-ion batteries have been put to practical use in the automotive industry as well as in information-related equipment and communication equipment. In the automotive industry, safety and reliability are important due to its relation to driver and traffic safety.

Lithium-ion batteries that are currently commercialized use an electrolytic solution containing a flammable organic dispersion medium (e.g., one or more inflammable solvents), and thus there is a possibility of overheating and/or fire when a short-circuit occurs. As a result, an all-solid battery utilizing a solid electrolyte instead of an electrolytic solution has been proposed.

Because an all-solid battery does not utilize a flammable organic solvent, the possibility of overheating and/or fire may be greatly reduced even when a short-circuit occurs. Therefore, such an all-solid battery may greatly enhance safety as compared with a lithium-ion battery utilizing an electrolytic solution.

### SUMMARY

One or more aspects of embodiments of the present disclosure are directed toward an all-solid secondary battery of a novel structure.

The present invention provides an all-solid secondary battery as defined in claim 1. Additional aspects of some embodiments will be set forth in the description that follows or will be defined in the dependent claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a cross-sectional view of an all-solid secondary battery according to an embodiment;
FIG. 2A is a schematic view illustrating a preparation process of the all-solid secondary battery according to an embodiment;
FIG. 2B is a schematic view illustrating L1 and L2 of an insulating member of the all-solid secondary battery of FIG. 2A;
FIG. 3 is a schematic view of an upper surface of a composite structure according to an embodiment;
FIG. 4 is a cross-sectional view of an all-solid secondary battery according to another embodiment; and
FIG. 5 is a cross-sectional view of an all-solid secondary battery according to another embodiment.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described below, by referring to the drawings, to explain aspects of the present description. As used herein, the term "and/or" includes any and all combinations of one or more of the associated listed items. Expressions such as "at least one of," "one of," and "selected from," when preceding a list of elements, modify the entire list of elements and do not modify the individual elements of the list.

As used herein, singular forms such as "a," "an," and "the" are intended to include the plural forms as well, unless the context clearly indicates otherwise. It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof.

As used herein, the terms "use," "using," and "used" may be considered synonymous with the terms "utilize," "utilizing," and "utilized," respectively. Further, the use of "may" when describing embodiments of the present disclosure refers to "one or more embodiments of the present disclosure".

It will be understood that when an element is referred to as being "on," "connected to," or "coupled to" another element, it may be directly on, connected, or coupled to the other element or one or more intervening elements may also be present. When an element is referred to as being "directly on," "directly connected to," or "directly coupled to" another element, there are no intervening elements present.

Spatially relative terms, such as "beneath," "below," "lower," "above," "upper," "bottom," "top," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, if the device in the drawings is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

Hereinafter, an all-solid secondary battery according to one or more embodiments will be described in more detail.

An all-solid secondary battery in the art including a sulfide-based solid electrolyte is required to be pressed at a high pressure. The all-solid secondary battery in the art is prepared by stacking a cathode layer, a solid electrolyte layer, and an anode layer, and pressing a stack of these layers at a high pressure. When a plate press is applied in the pressing of the stack, physical defects may occur at the edges (e.g., peripheral edges) of the solid electrolyte layer during a blanking process due to a step difference (e.g., difference in height) between the cathode layer and the solid electrolyte layer, and due to the defects, a current may flow between an anode and a cathode during an initial charging process.

When an all-solid secondary battery is prepared according to this method, a number of physical defects may occur on fractured surfaces generated in the blanking process. The defects may cause a short-circuit during an initial charging process.

Because a sulfide-based solid electrolyte becomes brittle after being pressed, when a separate pressing process is additionally applied, a battery including the sulfide-based solid electrolyte may have additional physical defects or existing defects that are further developed.

In this regard, the present inventive entity has completed the present disclosure providing an all-solid secondary battery having a structure that may resolve these problems to fundamentally eliminate physical defects of the fractured surface generated during a pressing process and a blanking process so that the defects and their consequences may be reduced (e.g., may not be exhibited) during a charging/discharging process.

### All-solid secondary battery

According to an embodiment, an all-solid secondary battery includes a cathode layer; an anode layer; a first solid electrolyte layer between the cathode layer and the anode layer and adjacent to the cathode layer; and a second solid electrolyte layer between the cathode layer and the anode layer and adjacent to the anode layer, wherein the cathode layer includes a cathode current collector, and a cathode active material on the cathode current collector, and the anode layer includes an anode current collector, and a first anode active material layer or a third anode active material layer on the anode current collector.

The all-solid secondary battery may include a composite structure between the first solid electrolyte layer and the second solid electrolyte layer. The composite structure may include a composite solid electrolyte that is on a central portion of the second solid electrolyte layer and includes an ion conductor and a lithium salt; and an insulating member that is arranged on peripheral portions of the second solid electrolyte layer and is adjacent to or around (e.g., surrounds) one or more (e.g., all) outer surfaces of the composite solid electrolyte.

When the composite structure between the first solid electrolyte layer and the second solid electrolyte layer includes a composite solid electrolyte that is on a central portion of the second solid electrolyte layer; and an insulating member that surrounds outer surfaces of the composite solid electrolyte and is arranged on peripheral portions of the second solid electrolyte layer, defects of the solid electrolyte layers generated during a pressing process and a blanking process may be less occurred or reduced, and thus a short-circuit between a cathode and an anode may be prevented or reduced. In particular, rapid decrease of battery capacity due to short-circuiting may be prevented or reduced, and thus the cycle characteristics of the all-solid secondary battery may be improved.

A thermoplastic adhesive coating film may be on one or more surfaces of the insulating member. When a thermoplastic adhesive coating film is on a surface of the insulating member, the insulating member may be adhered to the composite solid electrolyte, for example, to one or more side surfaces of the composite solid electrolyte layer, so that the bonding strength may be well maintained, and/or the bonding strength of the insulating member to the first solid electrolyte layer and/or the second solid electrolyte layer may be enhanced. The fluidity and/or wetting ability of the insulating member may be high, and thus the insulating member may be well absorbed and impregnated (e.g., into another surface or element) without cavities or voids to have excellent or suitable adhesiveness, for example, even on an uneven surface of a solid electrolyte layer or despite inner defects of a solid electrolyte layer. When fluidity of the insulating member is low, the wetting ability of the insulating member may be deteriorated, and permeability to a rough surface may be low, which makes it difficult for the insulating member to be attached to the first solid electrolyte layer or the second electrolyte layer without defects.

The composite solid electrolyte and the insulating member are between the first solid electrolyte layer on the cathode layer and the second solid electrolyte layer on the anode layer, which results in decreased interfacial resistance.

The cathode layer, having the first solid electrolyte layer thereon, is stacked on the composite solid electrolyte/insulating member on the second solid electrolyte layer, and then these layers are hot pressed, thereby preparing an all-solid secondary battery.

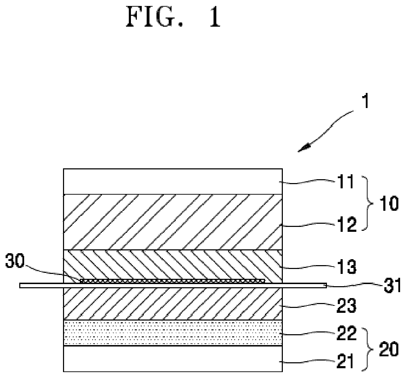

Referring to FIG. 1, an all-solid secondary battery 1 includes a cathode layer 10; an anode layer 20; and a first solid electrolyte layer 13 and a second solid electrolyte layer 23 between the cathode layer 10 and the anode layer 20. The first solid electrolyte layer 13 is adjacent (i.e., closer) to the cathode layer 10, and the second solid electrolyte layer 23 is adjacent (i.e., closer) to the anode layer 20.

A composite solid electrolyte 30 and an insulating member 31 are between the first solid electrolyte layer 13 and the second solid electrolyte layer 23 as shown in FIG. 1. When a thickness of the composite solid electrolyte 30 and a thickness of the insulating member 31 are the substantially same, the composite solid electrolyte 30 would not be visible in the cross-sectional view. In FIG. 1, the thickness of the composite solid electrolyte 30 is exaggerated to illustrate the arrangement state (e.g., positioning) of the composite solid electrolyte 30.

The composite solid electrolyte 30 is arranged on a central portion of the second solid electrolyte layer 23, and the insulating member 31 is arranged on peripheral portions of the second solid electrolyte layer 23. The insulating member 31 may extend to the ends (e.g., perimeter) or the outermost portions of the second solid electrolyte layer 23. When the insulating member 31 extends at least to the ends of the second solid electrolyte layer 23, cracks occurring at the ends may be suppressed or reduced. As referred to herein, the ends of the second solid electrolyte layer 23 are the outermost portions of the second solid electrolyte layer 23 and may be in contact with (e.g., adjacent to) the side (e.g., thickness direction) surfaces of the second solid electrolyte layer 23. For example, the insulating member 31 may extend to the outermost portions of the second solid electrolyte layer 23, which are in contact with the side surfaces of the second solid electrolyte layer 23. In some embodiments, the insulating member 31 may be arranged to protrude from (e.g., past) the outermost portions of the first solid electrolyte layer 13 and/or the second solid electrolyte layer 23, as shown in FIG. 1. When the insulating member 31 is arranged to protrude from the outermost portions as described above, alignment deviations (e.g., mis-alignment) of the cathode layer 10 and the anode layer 20 may be reduced.

An area (e.g., planar surface area or area in a plan view) of the composite solid electrolyte 30 may be greater than an area (e.g., planar surface area or area in a plan view) of the insulating member 31. When the insulating member 31 is arranged to surround the outer surfaces of the composite solid electrolyte 30, the area error (e.g., area mismatch) of the first solid electrolyte layer 13 and the second solid electrolyte layer 23 may be corrected. When the area error is corrected in this manner, cracks of the first solid electrolyte layer 13 and the second solid electrolyte layer 23 occurring by pressure difference during a pressing process may be effectively suppressed or reduced, and alignment deviation of the cathode layer 10 and the anode layer 20 may be reduced.

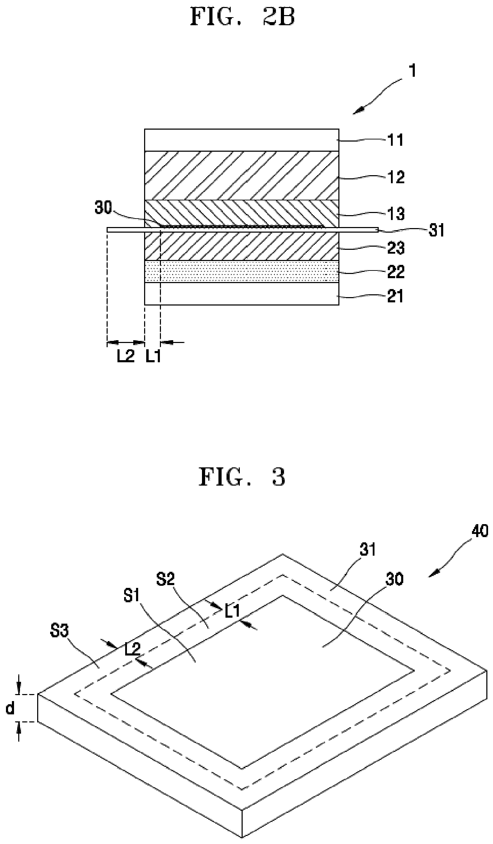

FIG. 3 is a schematic perspective view illustrating a composite structure 40 that is bonded to a second solid electrolyte layer/anode layer stack.

Referring to FIG. 3, the composite structure 40 may include the composite solid electrolyte 30 and the insulating member 31 arranged to surround the outer surfaces of the composite solid electrolyte 30 (e.g., the insulating member 31 may frame the composite solid electrolyte). In FIG. 3, S1 denotes a total area (e.g., planar surface area) of the composite solid electrolyte 30, and a total area (e.g., planar surface area) of the insulating member 31 is the total area of S2 and S3. Here, S3 denotes an area of the insulating member 31 protruding from (e.g., past) the outermost portions of the second solid electrolyte layer 23. The area within the dashed line in FIG. 3 may correspond to a stacking position (e.g., the perimeter) of the second solid electrolyte layer 23.

In one embodiment, the area S1 of the composite solid electrolyte 30 may be less than about 100 %, about 50 % or greater to less than about 100 %, about 50 % to about 98 %, about 60 % to about 96 %, or in a range of about 70 % to about 95 %, about 80 % to about 95 %, or about 80 % to about 90 % based on the corresponding total area of the second solid electrolyte layer 23. Here, the total area of the second solid electrolyte layer 23 may be the same as the total area S1+S2. When the area S1 of the composite solid electrolyte 30 is within these ranges, a short-circuit caused by physical contact of a cathode layer 10 and an anode layer 20 during pressing and blanking processes or overcharging of lithium may be prevented or reduced.

The area S2+S3 of the insulating member 31 may be in a range of about 5 % to about 60 %, about 10 % to about 40 %, or about 10 % to about 20 % based on the corresponding total area S1+S2 of the second solid electrolyte layer 23.

In some embodiments, the area S2 of the insulating member 31 may be, for example, less than about 18 %, less than about 10 % or in a range of about 1 % to about 10 %, 2 % to 8 %, or 4 % to 6% based on the total area S1+S2 of the second solid electrolyte layer 23. Also, the area S3 of the insulating member 31 may be about 10 % or less or in a range of about 3 % to about 10 % or about 4 % to about 10 % based on the total area S1+S2 of the second solid electrolyte layer 23. When the areas S2 and S3 of the insulating member 31 are within these ranges, a short-circuit caused by physical contact of a cathode layer 10 and an anode layer 20 during pressing and blanking processes or overcharging of lithium may be prevented or reduced.

A thickness of the composite solid electrolyte 30 may be in a range of about 1 µm to about 10 µm, for example, about 2 µm to about 8 µm, or about 4 µm to about 6 µm, and a thickness of the insulating member 31 may be in a range of about 1 µm to about 10 µm, for example, about 2 µm to about 8 µm, or about 4 µm to about 6 µm. When the thicknesses of the composite solid electrolyte 30 and the insulating member 31 are within these ranges, an initial capacity and/or high-rate performance of the all-solid secondary battery may be excellent or suitable, and processability and/or energy density of the all-solid secondary battery may be improved.

The thickness of the composite solid electrolyte 30 may be controlled or selected with respect to the thickness of the insulating member 31. When a thickness of the insulating member 31 is greater (e.g., significantly greater, for example more than 3 µm, or 5 µm) than that of the composite solid electrolyte 30, contact resistance may increase (e.g., because a gap may be produced between the composite solid electrolyte 30 and either of the first solid electrolyte layer 13 and the second solid electrolyte layer 23). In some embodiments, the thickness of the composite solid electrolyte 30 and the insulating member 31 may be substantially the same, e.g., may differ by 2 µm or less.

Further, when a thickness of the insulating member 31 is greater than the above ranges, battery processability may be improved, but the energy density may be poor. When the thickness of the insulating member 31 is too thin (e.g., smaller than the above ranges), the energy density may increase, but the processability may be poor. A thickness of the insulating member 31 may be selected in consideration of processability and energy density (e.g., simultaneously). When a thickness of the composite solid electrolyte 30 is greater than the above ranges, gaps may occur at the edges (e.g., of the stack), and physical defects may easily occur during contraction and expansion by charging/discharging of the battery. When a thickness of the composite solid electrolyte 30 is thinner than the ranges, interfacial resistance of the first solid electrolyte layer 13 and the second solid electrolyte layer 23 may increase, which may weaken cell performance of the battery.

### Cathode layer: Cathode current collector

The cathode current collector 11 may be a plate or a foil formed of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy of any thereof. In some embodiments, the cathode current collector 11 may not be provided.

The cathode current collector 11 may further include a carbon layer arranged on one surface or two (e.g., both) surfaces of a metal substrate. When the carbon layer is additionally included on the metal substrate, corrosion of the metal substrate by solid electrolyte in the cathode layer 10 may be prevented or reduced, and interfacial resistance between the cathode active material layer 12 and the cathode current collector 11 may decrease. A thickness of the carbon layer may be, for example, in a range of about 1 µm to about 5 µm. When the thickness of the carbon layer is within this range, contact between the metal substrate and the solid electrolyte may be reduced, and in some embodiments substantially or completely blocked, without deteriorating an energy density of the all-solid secondary battery. The carbon layer may include amorphous carbon and/or crystalline carbon.

### Cathode layer: Cathode active material

The cathode active material layer 12 may include, for example, a cathode active material, a solid electrolyte, and a binder.

The cathode active material layer 12 may further include a conducting agent. The conducting agent may be, for example, at least one selected from graphite, carbon black, acetylene black, carbon nanofiber, and carbon nanotube.

A solid electrolyte in the cathode layer 10 may be same or different from a solid electrolyte in the solid electrolyte layer. Details of the solid electrolyte are the same as defined with reference to the solid electrolyte layer.

The cathode active material is a cathode active material capable of reversibly absorbing and desorbing lithium ions. The cathode active material may be, for example, a lithium transition metal oxide (such as a lithium cobalt oxide (LCO), a lithium nickel oxide, a lithium nickel cobalt oxide, a lithium nickel cobalt aluminum oxide (NCA), a lithium nickel cobalt manganese oxide (NCM)); a lithium manganite; a lithium iron phosphate; a nickel sulfide; a copper sulfide; a lithium sulfide; an iron oxide; and/or a vanadium oxide, but embodiments are not limited thereto, and any suitable cathode active material in the art may be utilized. The cathode active material may be one of these examples alone, or a mixture of at least two selected from these examples.

The cathode active material may be, for example, a compound represented by one of the following formulae: LiₐA_{1-b}B'_{b}D₂ (where 0.90≤a≤1 and 0≤b≤0.5); LiₐE_{1-b}B'_{b}O_{2-c}D_{c} (where 0.90≤a≤1, 0≤b≤0.5, and 0≤c≤0.05); LiE_{2-b}B'_{b}O_{4-c}D_{c} (where 0≤b≤0.5 and 0≤c≤0.05); LiₐNi_{1-b-c}Co_{b}B'_{c}D_{α} (where 0.90≤a≤1, 0≤b≤0.5, 0≤c≤0.05, and 0<α≤2); LiₐNi_{1-b-c}Co_{b}B'_{c}O_{2-α}F'_{α} (where 0.90≤a≤1, 0≤b≤0.5, 0≤c≤0.05, and 0<α<2); LiₐNi_{1-b-c}Co_{b}B'_{c}O_{2-α}F'₂ (where 0.90≤a≤1, 0≤b≤0.5, 0≤c≤0.05, and 0<α<2); LiₐNi_{1-b-c}Mn_{b}B'_{c}D_{α} (where 0.90≤a≤1, 0≤b≤0.5, 0≤c≤0.05, and 0<α≤2); LiₐNi_{1-b-c}Mn_{b}B'_{c}O_{2-α}F'_{α} (where 0.90≤a≤1, 0≤b≤0.5, 0≤c≤0.05, and 0<α<2); LiₐNi_{1-b-c}Mn_{b}B'_{c}O_{2-α}F'₂ (where 0.90≤a≤1, 0≤b≤0.5, 0≤c≤0.05, and 0<α<2); LiₐNi_{b}E_{c}G_{d}O₂ (where 0.90≤a≤1, 0≤b≤0.9, 0≤c≤0.5, and 0.001≤d≤0.1); LiₐNi_{b}Co_{c}Mn_{d}GₑO₂ (where 0.90≤a≤1, 0≤b≤0.9, 0≤c≤0.5, 0≤d≤0.5, and 0.001≤e≤0.1 ); LiₐNiG_{b}O₂ (where 0.90≤a≤1 and 0.001≤b≤0.1);LiₐCoG_{b}O₂ (where 0.90≤a≤1 and 0.001≤b≤0.1); LiₐMnG_{b}O₂ (where 0.90≤a≤1 and 0.001≤b≤0.1 );LiₐMn₂G_{b}O₄ (where 0.90≤a≤1 and 0.001≤b≤0.1);QO₂; QS₂; LiQS₂; V₂O₅; LiV₂O₅; Lil'O₂; LiNiVO₄; Li(_{3-f})J₂(PO₄)₃ (where 0≤f≤2); Li(_{3-f)}Fe₂(PO₄)₃ (where 0≤f≤2); and LiFePO₄. In the compound, A may be nickel (Ni), cobalt (Co), manganese (Mn), or a combination thereof; B' may be aluminum (Al), nickel (Ni), cobalt (Co), manganese (Mn), chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be cobalt (Co), manganese (Mn), or a combination thereof; F' may be fluorine (F), sulfur (S), phosphorus (P), or a combination thereof; G may be aluminum (Al), chromium (Cr), manganese (Mn), iron (Fe), magnesium (Mg), lanthanum (La), cerium (Ce), strontium (Sr), vanadium (V), or a combination thereof; Q may be titanium (Ti), molybdenum (Mo), manganese (Mn), or a combination thereof; I' may be chromium (Cr), vanadium (V), iron (Fe), scandium (Sc), yttrium (Y), or a combination thereof; and J may be vanadium (V), chromium (Cr), manganese (Mn), cobalt (Co), nickel (Ni), copper (Cu), or a combination thereof. The compounds may each independently have a surface coating layer (hereinafter, also referred to as "coating layer"). In some embodiments, a mixture of a compound without a coating layer and a compound having a coating layer, the compounds being independently selected from the compounds listed above, may be utilized. In some embodiments, the coating layer may include at least one compound of a coating element selected from the group consisting of an oxide, a hydroxide, an oxyhydroxide, an oxycarbonate, and a hydroxycarbonate of the coating element. In some embodiments, the compounds for the coating layer may be amorphous and/or crystalline. In some embodiments, the coating element in the coating layer may be or include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. In some embodiments, the coating layer may be formed utilizing any method that does not adversely affect the physical properties of the cathode active material when a compound of the coating element is utilized. For example, the coating layer may be formed utilizing a spray coating method or a dipping method. The coating methods may be well understood by one of ordinary skill in the art, and thus a detailed description thereof will not be provided.

The cathode active material may include, for example, a lithium salt of a transition metal oxide that has a layered rock-salt structure among the examples of the lithium transition metal oxide. For example, the term "layered rock-salt structure" refers to a structure in which an oxygen atom layer and a metal atom layer are alternately and regularly arranged in the <111 > direction in a cubic rock-salt structure, where each of the atom layers forms a two-dimensional flat plane. The term "cubic rock-salt structure" refers to a sodium chloride (NaCI) type crystalline structure, in which face-centered cubic (fcc) lattices respectively formed of anions and cations are shifted by only a half of the ridge of each unit lattice. Examples of the lithium transition metal oxide having the layered rock-salt structure may include a ternary lithium transition metal oxide (such as LiNiₓCo_{y}Al_{z}O₂ (NCA) and/or LiNiₓCo_{y}Mn_{z}O₂ (NCM), where 0<x<1, 0<y<1, 0<z<1, and x+y+z=1). When the cathode active material includes a ternary lithium transition metal oxide having the layered rock-salt structure, an energy density and/or thermal stability of the all-solid secondary battery 1 may be improved.

The cathode active material may be covered by a coating layer as described above. The coating layer may be any suitable material in the art that may be utilized as a coating layer of a cathode active material of an all-solid secondary battery. The coating layer may be, for example, Li₂O-ZrO₂ (LZO).

When the cathode active material includes a ternary lithium transition metal oxide including nickel (Ni) (such as NCA and/or NCM), a capacity density of the all-solid secondary battery 1 increases, and thus metal elution from the cathode active material in a charged state may be reduced. As a result, the all-solid secondary battery 1 according to an embodiment may have improved cycle characteristics in a charged state.

A particle shape of the cathode active material may be, for example, a true spherical shape, an elliptical shape, and/or a spherical shape. A particle diameter of the cathode active material is not particularly limited but may be in a range applicable to a cathode active material of an all-solid secondary battery. An amount of the cathode active material of the cathode layer 10 is not particularly limited and may be in a range applicable to a cathode layer 10 of an all-solid secondary battery.

### Cathode layer: Solid electrolyte

The cathode active material layer 12 may, for example, include a solid electrolyte. The solid electrolyte in the cathode layer 10 may be identical to or different from the solid electrolyte in the first solid electrolyte layer 13. Details of the solid electrolyte may be the same as defined with reference to the first solid electrolyte layer 13.

A average particle diameter D50 of particles of the solid electrolyte included within the cathode active material layer 12 may be less (e.g., smaller) than that of particles of the solid electrolyte of the first solid electrolyte layer 13. For example, the average particle diameter D50 of the solid electrolyte in the cathode active material layer 12 may be, for example, about 90 % or less, about 80 % or less, about 70 % or less, about 60 % or less, about 50 % or less, about 40 % or less, about 30 % or less, or about 20 % or less of the average particle diameter D50 of the solid electrolyte in the first solid electrolyte layer 13.

### Cathode layer: Binder

The cathode active material layer 12 may include a binder. Examples of the binder may include styrene butadiene rubber (SBR), polytetrafluoroethylene, polyvinylidene fluoride, polyethylene, vinylidene fluoride/hexafluoropropylene co-polymer, polyacrylonitrile, and/or polymethyl methacrylate.

### Cathode layer: Conducting agent

The cathode active material layer 12 may include a conducting agent. The conducting agent may be or include, for example, graphite, carbon black, acetylene black, ketjen black, carbon fiber, carbon tubes (e.g., carbon nanotubes), and/or metal powder.

### Cathode layer: Additive

The cathode active material layer 12 may further include one or more additives (such as a filler, a coating agent, a dispersant, and/or an ion conducting agent) in addition to the cathode active material, solid electrolyte, binder, and/or conducting agent.

The filler, coating agent, dispersant, and/or ion conducting agent that may be included in the cathode active material layer 12 may be any suitable material in the art for an electrode of an all-solid secondary battery 1.

### First solid electrolyte layer and second solid electrolyte layer

### Solid electrolyte layer: Solid electrolyte

The first solid electrolyte layer 13 and the second solid electrolyte layer 23 may each independently include a solid electrolyte.

The solid electrolyte may be, for example, a sulfide-based solid electrolyte. The sulfide-based solid electrolyte may be at least one selected from Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive number, and Z is one of Ge, Zn, and Ga), Li₂S-GeS₂, Li₂S-SiS₂-Li₃PO₄, Li₂S-SiS₂-LiₚMO_{q} (where p and q are each a positive number, and M is one of P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be prepared by, for example, melting and quenching or mechanically milling starting materials (e.g., Li₂S and/or P₂S₅). Subsequently, the resultant may be heat-treated. The sulfide-based solid electrolyte may be amorphous or crystalline, or may be a mixed form thereof. In some embodiments, the sulfide-based solid electrolyte may be a material selected from these examples of the sulfide-based solid electrolyte including at least sulfur (S), phosphorus (P), and lithium (Li), as component elements. For example, the sulfide-based solid electrolyte may be a material including Li₂S-P₂S₅. Here, when the material including Li₂S-P₂S₅ is utilized as a sulfide-based solid electrolyte material, a mixing molar ratio of Li₂S and P₂S₅ (Li₂S:P₂S₅) may be, for example, in a range of about 50:50 to about 90:10.

The sulfide-based solid electrolyte may include, for example, an argyrodite-type (e.g., argyrodite-based) solid electrolyte represented by Formula 1:

**Formula 1** Li⁺₁₂₋ₙ₋ₓAⁿ⁺X²⁻₆₋ₓY⁻ₓ.

In Formula 1, A may be P, As, Ge, Ga, Sb, Si, Sn, Al, In, Ti, V, Nb, and/or Ta, X may be S, Se, and/or Te, Y may be CI, Br, I, F, CN, OCN, SCN, and/or N₃, 1≤n≤5, and 0≤x≤2.

The sulfide-based solid electrolyte may be, for example, an argyrodite-type compound including at least one selected from Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The sulfide-based solid electrolyte may be, for example, an argyrodite-type compound including at least one selected from LiₑPS₅Cl, Li₆PS₅Br, and Li₆PS₅I.

A density of the argyrodite-type solid electrolyte may be in a range of about 1.5 g/cc to about 2.0 g/cc. When a density of the argyrodite-type solid electrolyte is about 1.5 g/cc or higher, internal resistance of an all-solid secondary battery may decrease, and/or penetration of a solid electrolyte layer by migration of Li may be effectively suppressed or reduced.

An elastic modulus (e.g., Young's modulus) of the sulfide-based solid electrolyte may be, for example, about 35 GPa or less, about 30 GPa or less, about 27 GPa or less, about 25 GPa or less, or about 23 GPa or less. An elastic modulus (e.g., Young's modulus) of the sulfide-based solid electrolyte may be, for example, in a range of about 10 GPa to about 35 GPa, about 10 GPa to about 25 GPa, or about 10 GPa to about 23 GPa. When a sulfide-based solid electrolyte has the elastic modulus within these ranges, a temperature and/or a pressure required for sintering may decrease, and thus sintering of the solid electrolyte may be easily performed.

### First solid electrolyte layer and second solid electrolyte layer: Binder

The first solid electrolyte layer 13 and the second solid electrolyte layer 23 may each independently include, for example, a binder. The binder may be, for example, styrene butadiene rubber (SBR), polytetrafluoroethylene, polyvinylidene fluoride, or polyethylene, but embodiments are not limited thereto, and any material available as a binder in the art may be utilized. The binder of the first solid electrolyte layer 13 and the second solid electrolyte layer 23 may be identical to or different from a binder of the cathode active material layer 12 and the anode active material layer 22.

### Composite structure

The insulating member 31 may be arranged on peripheral portions of the second solid electrolyte layer 23 and in contact with the composite solid electrolyte 30. At least one surface, for example, two surfaces of the insulating member 31 may be coated with a thermoplastic adhesive film.

A thermoplastic adhesive film may include a thermoplastic resin exhibiting an adhesive property.

Examples of the thermoplastic resin may include suitable thermoplastic adhesive resins (such as polyethylene-based resins, polypropylene-based resins, propylene-ethylene block or reduce-based resins, random-based resins, graft-based polymers, polystyrene-based resins, and/or acrylic resins). The binder may be or include one of these examples alone or a mixture of at least two selected from these examples. Examples of the polyethylene-based resin may include polyolefin resins (such as low-density polyethylene, linear low-density polyethylene, polypropylene, poly-1-butene, poly-4-methyl-1-pentene, ethylene-propylene co-polymer, ethylene-1-butene co-polymer, ethylene-1-hexene co-polymer, ethylene-4-methyl-1-pentene co-polymer, ethylene-1-octene co-polymer, ethylene-methyl acrylate co-polymer, ethylene-methyl methacrylate co-polymer, ethylene-vinyl acrylate co-polymer, ethylene-ethyl acrylate co-polymer, and/or ethylene-vinyl alcohol co-polymer).

Examples of the polystyrene-based resin may be A-B type diblock polymers (such as styrene butadiene (SB), styrene isoprene (SI), styrene ethylene-butylene co-polymer (SEB), and/or styrene ethylene-propylene co-polymer (SEP)), A-B-A type triblock polymers (such as styrene butadiene styrene (SBS), styrene isoprene styrene (SIS), styrene ethylene-butylene co-polymer styrene (SEBS), and/or styrene ethylene-propylene co-polymer styrene (SEPS)), A-B-A-B type tetrablock or higher multi-block polymers, styrene-based random co-polymers (such as styrene butadiene rubber (SBR)), and A-B-C type styrene olefin crystal-based block polymers (such as styrene ethylene-butylene co-polymer olefin crystal (SEBC)).

The composite solid electrolyte 30 may include an ion conductor and a lithium salt. The composite solid electrolyte 30 may decrease the interfacial resistance. The composite solid electrolyte 30 may further include at least one selected from a binder and an ionic liquid.

The ion conductor may be a polymer capable of dissolving a lithium salt, and examples of the ion conductor may include polyethylene oxide, polypropylene oxide, polyacrylonitrile, polyvinylidene fluoride-hexafluoropropylene, polyvinylidene fluoride-trichloroethylene, polymethylmethacrylate, polystyrene-acrylonitrile co-polymer, polyvinylchloride, polyvinylpyrrolidone, polyvinyl acetate, polyethylene vinyl acetate co-polymer, and any combination thereof. Movement of lithium in the composite solid electrolyte 30 may occur in the form of polymer intra-chain, interchain, and/or ion cluster hopping.

The lithium salt may be, for example, at least one selected from LiPF₆, LiBF₄, LiCF₃SO₃, Li(CF₃SO₂)₂N, Li(CF₃SO₂)₃C, LiC₂F₅SO₃, Li(FSO₂)₂N, LiC₄F₉SO₃, LiN(SO₂CF₂CF₃)₂, LiN(CN)₂, and compounds represented by Formulae 1 to 4. In some embodiments, a concentration of the lithium salt may be in a range of about 0.01 M to about 5 M, for example, about 0.1 M to about 3 M, or about 0.1 M to about 2 M.

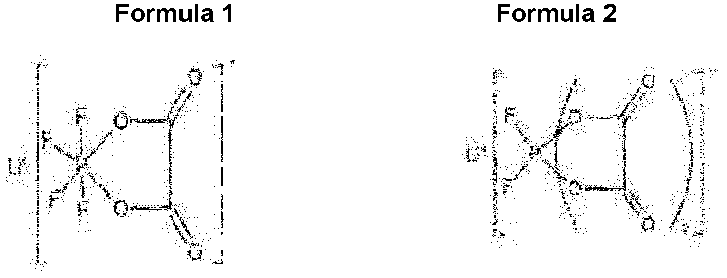

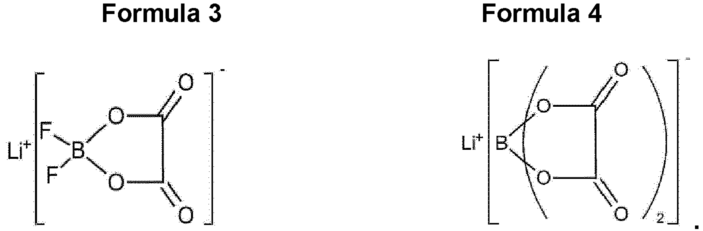

The composite solid electrolyte 30 of the composite structure may further include a binder.

Examples of the binder may include vinylidene fluoride/hexafluoropropylene co-polymer, polyvinylidene fluoride (PVDF), polyacrylonitrile, polymethyl methacrylate, polytetrafluoroethylene, and mixtures thereof, and/or styrene butadiene rubber-based polymer.

In some embodiments, the composite solid electrolyte 30 may be arranged closer to or adjacent to the first solid electrolyte layer 13 (for example, closer to or adjacent to the cathode layer 10) than to the second solid electrolyte layer 23 and the anode layer 20. When the composite solid electrolyte 30 is arranged closer to the second solid electrolyte layer 23, a thickness of the second solid electrolyte layer 23 is relatively thinner than a thickness of the first solid electrolyte layer 13, and thus a short-circuit caused by a lithium dendrite may easily occur.

In the composite solid electrolyte 30, EO/Li determines an amount of lithium ions in the composite solid electrolyte 30. EO/Li represents a molar ratio of ethylene oxide (EO) to lithium in the ion conductor. EO/Li may be, for, example, in a range of about 5 to about 25. When EO/Li is within this range, ionic conductivity of the composite solid electrolyte 30 may be excellent or suitable, and precipitation of a lithium salt may decrease or be suitably controlled, thereby preventing or reducing film non-uniformity and/or a short-circuit caused by lithium dendrite growth.

Because the insulating member 31 surrounds side surfaces of the composite solid electrolyte 30, is on the peripheral portions of the second solid electrolyte layer 23, and is in contact with the first solid electrolyte layer 13, physical defects that may occur during pressing and blanking processes of an electrode plate may be reduced or eliminated. Also, the insulating member 31 may control or reduce lithium dendrite phase growth at the edges of the electrode plate and/or secondary defects of the solid electrolyte layer caused by the lithium dendrite phase growth, and thus may suppress or reduce a short-circuit of the all-solid secondary battery 1.

The insulating member 31 may extend to the end (edges) or the outermost portions of the second solid electrolyte layer 23.

The insulating member 31 may be formed of any material that does not affect performance of the battery cell and that may alleviate defects of the solid electrolyte layer that would otherwise be generated during a blanking process and prevent or reduce a short-circuit of the anode layer 20 and the cathode layer 10. The insulating member 31 may be at least one selected from an insulating polymer and an insulating inorganic material. Examples of the insulating polymer may include polypropylene, polyethylene, acrylonitrile-butadiene rubber (NBR), styrene butadiene rubber (SBR), isobutylene isoprene rubber (IRR), chloroprene rubber, ethylene propylene diene monomer (EPDM), and any combination thereof. In some embodiments, the insulating member 31 may be impregnated with a lithium salt or an ionic liquid.

The area S3 of the insulating member 31 may resolve defects of the solid electrolyte layer while decreasing irreversible cathode loss, and may correct alignment deviations of the cathode layer 10 and the anode layer 20 and area mismatch between the first solid electrolyte layer 13 and the second solid electrolyte layer 23. For example, the area S3 of protruding portions of the insulating member 31 may be about 110 % or less, about 100 % or less, about 90 % or less, about 80 % or less, or about 70 % or less of the area S2 of the insulating member 31. When the area S3 of protruding parts of the insulating member 31 is within these ranges, possibility of a short-circuit occurring by physical contact of the cathode active material layer 12 and the anode active material layer 22 and/or possibility of a short-circuit occurring by overcharging of lithium may decrease.

In FIG. 3, the area S2 of the insulating member 31 is about 20 % or less or about 10 % or less of the area S1. For example, in the total area of the insulating member 31, the area S2 is in a range of about 1 % to about 20 %, about 5 % to about 20 %, or about 5 % to about 15 % of the area S1. When the area of the insulating member 31 extends widely as the total area of the second solid electrolyte layer 23 (e.g., is larger than the above ranges), a short-circuit may not occur, but a capacity of the battery may decrease. Also, when the insulating member 31 is not included in the battery, the battery may not be operable due to short-circuit occurrence. The area S2 and the area S1 may be the same as the area of the second solid electrolyte layer 23.

### Anode layer

### Anode layer: Anode active material

The anode layer 20 may include an anode current collector 21 and an anode active material layer 22 on the anode current collector 21. The anode active material layer 22 may include, for example, an anode active material and a binder.

The anode active material in the anode active material layer 22 may be, for example, in the form of particles. An average particle diameter of the anode active material may be, for example, about 4 µm or less, about 2 µm or less, about 1 µm or less, or about 900 nm or less. An average particle diameter of the anode active material may be, for example, in a range of about 10 nm to about 4 µm, about 10 nm to about 2 µm, or about 10 nm to about 900 nm. When the average particle diameter of the anode active material is within these ranges, reversible absorption and/or desorption of lithium during a charging/discharging process may further be facilitated. The average particle diameter of the anode active material may be a median particle diameter (D50) as measured by, for example, a laser-diffraction particle size distribution analyzer.

When a carbonaceous anode active material such as carbon black is used as the negative active material is, the primary particle diameter of the carbonaceous anode active material is 10 to 900 nm.

The anode active material may include, for example, at least one selected from a carbonaceous anode active material and a metal or metalloid anode active material.

The carbonaceous anode active material may be, for example, amorphous carbon. Examples of the amorphous carbon may include carbon black (CB), acetylene black (AB), furnace black (FB), ketjen black (KB), and/or graphene, but embodiments are not limited thereto, and any amorphous carbon available in the art may be utilized. The term "amorphous carbon" refers to carbon without crystallinity or with very low crystallinity, and is distinguished (e.g., different) from crystalline carbon or graphitic carbon.

The metal or metalloid anode active material may include at least one selected from the group consisting of gold (Au), platinum (Pt), palladium (Pd), silicon (Si), silver (Ag), aluminum (Al), bismuth (Bi), tin (Sn), and zinc (Zn), but embodiments are not limited thereto, and any metal anode active material or metalloid anode active material in the art capable of forming an alloy or compound with lithium may be utilized. For example, nickel (Ni) does not form an alloy with lithium and thus may not be utilized as the metal anode active material.

For example, the anode active material layer 22 may include one of the above-listed anode active materials or a mixture of the multiple anode active materials described above. For example, the anode active material layer 22 may include only amorphous carbon alone, or may include at least one selected from the group consisting of gold (Au), platinum (Pt), palladium (Pd), silicon (Si), silver (Ag), aluminum (Al), bismuth (Bi), tin (Sn), and zinc (Zn). In some embodiments, the anode active material layer 22 may include a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). In a mixture of amorphous carbon and, for example, gold (Au), a mixed ratio of the amorphous carbon to gold (Au) may be, for example, about 10:1 to about 1:2, about 5:1 to about 1:1, or about 4:1 to about 2:1, but embodiments are not limited thereto, and the mixed ratio may be appropriately chosen according to desired or suitable characteristics of the all-solid secondary battery 1. When the anode active material of the anode active material layer 22 has a composition as described above, the all-solid secondary battery 1 may have further improved cycle characteristics.

The anode active material of the anode active material layer 22 may include, for example, a mixture of first particles including (e.g., consisting of) amorphous carbon and second particles including (e.g., consisting of) a metal or metalloid. Examples of the metal or metalloid may include gold (Au), platinum (Pt), palladium (Pd), silicon (Si), silver (Ag), aluminum (Al), bismuth (Bi), tin (Sn), and zinc (Zn). For example, the metalloid may be a semiconductor. An amount of the second particles may be in a range of about 8 weight% (wt%) to about 60 wt%, about 10 wt% to about 50 wt%, about 15 wt% to about 40 wt%, or about 20 wt% to about 30 wt%, based on the total weight of the mixture. When the amount of the second particles is within these ranges, the all-solid secondary battery 1 may have further improved cycle characteristics.

### Anode layer: Binder

Examples of a binder in the anode active material layer 22 may include, for example, styrene-butadiene rubber (SBR), polytetrafluoroethylene (PTFE), polyvinylidene fluoride (PVDF), polyethylene, a vinylidene fluoride/hexafluoropropylene co-polymer, polyacrylonitrile, and/or polymethylmethacrylate, but embodiments are not limited thereto, and any material available as a binder in the art may be utilized. The binder may be formed of one of these examples of the binder alone or a plurality of different binders.

When the anode active material layer 22 includes the binder, the anode active material layer 22 may be stabilized on the anode current collector 21. Also, cracks of the anode active material layer 22 may be suppressed or reduced despite volume changes and/or relative position changes of the anode active material layer 22 during the charging/discharging process. For example, when the anode active material layer 22 does not include a binder, the anode active material layer 22 may be easily separated from the anode current collector 21. When a portion of the separated anode electrode current collector 21 is thus exposed, the exposed portion of the anode current collector 21 may contact the second solid electrolyte layer 23, and this may increase the possibility of short-circuiting. The anode active material layer 22 may be prepared by, for example, coating the anode current collector 21 with a slurry in which materials constituting the anode active material layer 22 are dispersed, and drying the slurry and the anode current collector 21. When the binder is included in the anode active material layer 22, the anode active material may be stably dispersed in the slurry. For example, when the anode current collector 21 is coated with the slurry utilizing a screen printing method, clogging of the screen (e.g., clogging by the aggregate of the anode active material) may be suppressed or reduced.

### Anode layer: Additive

The anode active material layer 22 may further include additives (such as a filler, a coating agent, a dispersant, and/or an ion conducting agent) utilized in an all-solid secondary battery of the related art.

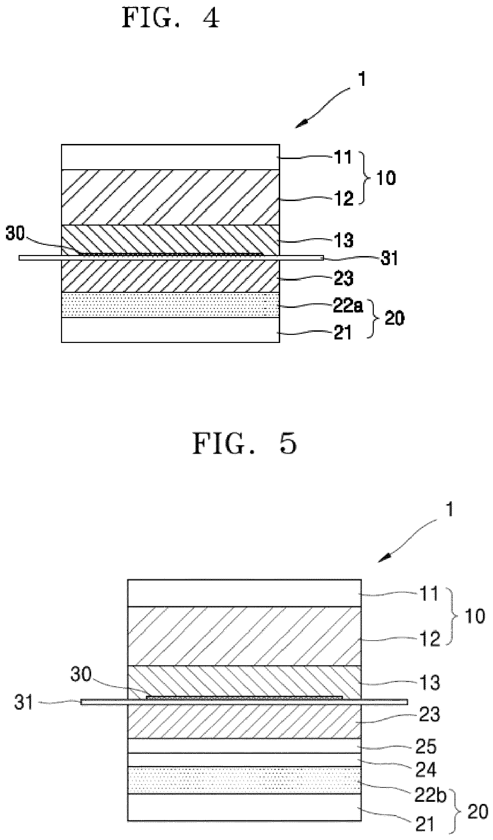

The anode active material layer 22 may be a first anode active material layer 22a as shown in FIG. 4, or a third anode active material layer 22b as shown in FIG. 5.

### Anode layer: First anode active material layer

A thickness of the first anode active material layer 22a may be, for example, about 50 % or less, about 40 % or less, about 30 % or less, about 20 % or less, about 10 % or less, or about 5 % or less of a thickness of the cathode active material 12. A thickness of the first anode active material layer 22a may be, for example, in a range of about 1 µm to about 20 µm, about 2 µm to about 10 µm, or about 3 µm to about 7 µm. When the thickness of the first anode active material layer 22a is within these ranges, cycle characteristics of the all-solid secondary battery 1 may be excellent or suitable, and a charge capacity of the first anode active material layer 22a may be excellent or suitable. A charge capacity of the first anode active material layer 22a may be, for example, about 50 % or less, about 30 % or less, about 10 % or less, about 5 % or less, or about 2 % or less of a charge capacity of the cathode active material layer 12. The charge capacity of the first anode active material layer 22a may be, for example, in a range of about 0.1 % to about 50 %, about 0.1 % to about 30 %, about 0.1 % to about 10 %, about 0.1 % to about 5 %, or about 0.1 % to about 2 % of a charge capacity of the cathode active material layer 12. When the charge capacity of the first anode active material layer 22a is within these ranges, a thickness of the first anode active material layer 22a may be controlled or selected to an appropriate or suitable range, and thus cycle characteristics and/or an energy density of the all-solid secondary battery 1 may be excellent or suitable in repeated charge/discharge processes.

The charge capacity of the cathode active material layer 12 may be obtained by multiplying a charge capacity density (mAh/g) of a cathode active material in the cathode active material layer 12 by a weight of the cathode active material. When different cathode active materials are utilized, a charge capacity density of each of the cathode active material layers may be multiplied by the respective weights thereof, and the sum of the multiplication products may be calculated to yield the charge capacity of the cathode active material layer 12. The charge capacity of the first anode active material layer 22a may be calculated in the same manner. For example, the charge capacity of the first anode active material layer 22a may be obtained by multiplying a charge capacity density (mAh/g) of an anode active material in the first anode active material layer by a weight of the anode active material. When different anode active materials are utilized, a charge capacity density of each of the anode active material layers may be multiplied by the respective weights thereof, and the sum of the multiplication products may be calculated to yield the charge capacity of the first anode active material layer 22a. Here, the charge capacity densities of the cathode active material and the anode active material are estimated capacities obtained from an all-solid half-cell including lithium metal as a counter electrode. The charge capacities of the cathode active material layer 12 and the first anode active material layer 22a may be directly measured by charge capacity measurement utilizing an all-solid half-cell. The measured charge capacity of each of the cathode active material and the anode active material may be divided by a weight of the corresponding active material, thereby calculating a charge capacity density. In some embodiments, the charge capacities of the cathode active material layer 12 and the first anode active material layer 22a may be initial charge capacities measured after the 1st charging cycle.

### Anode layer: Second anode active material layer (precipitate layer)

In some embodiments, the all-solid secondary battery 1 may further include a second anode active material layer between the anode electrode current collector 21 and the first anode active material layer 22a through charging. The second anode active material layer may be a metal layer including lithium or a lithium alloy. The metal layer may include lithium or a lithium alloy. Accordingly, because the second anode active material layer is a metal layer including lithium, the second anode active material layer may serve as, for example, a lithium reservoir. The lithium alloy may be, for example, a Li-AI alloy, a Li-Sn alloy, a Li-In alloy, a Li-Ag alloy, a Li-Au alloy, a Li-Zn alloy, a Li-Ge alloy, or a Li-Si alloy, but embodiments are not limited thereto, and any material available as a lithium alloy in the art may be utilized. The second anode active material layer may be formed of one of these alloys or lithium or may be formed of one or more suitable alloys.

A thickness of the second anode active material layer may be, for example, in a range of about 1 µm to about 1000 µm, about 1 µm to about 500 µm, about 1 µm to about 200 µm, about 1 µm to about 150 µm, about 1 µm to about 100 µm, or about 1 µm to about 50 µm, but embodiments are not limited thereto. When the second anode active material layer is too thin, the second anode active material layer may not serve as a lithium reservoir. When the thickness of the second anode active material layer is within these ranges, cycle characteristics of the all-solid secondary battery 1 may be excellent or suitable. The second anode active material layer may be, for example, a metal foil having a thickness within these ranges.

In the all-solid secondary battery 1, the second anode active material layer may be, for example, precipitated between the anode current collector 21 and the first anode active material layer 22a through charging after assembly of the all-solid secondary battery 1. When the second anode active material layer is precipitated through charging after assembly of the all-solid secondary battery 1, the second anode active material layer is not present during the assembly of the all-solid secondary battery 1, and thus the all-solid secondary battery 1 may have an increased energy density. For example, the all-solid secondary battery 1 may be charged exceeding a charge capacity of the first anode active material layer 22a. For example, the first anode active material layer 22a may be overcharged. At an initial charging stage, lithium may be absorbed into the first anode active material layer 22a. The anode active material in the first anode active material layer 22a may form an alloy or a compound with lithium ions that have moved from the cathode layer 10. When the first anode active material layer 22a is overcharged, for example, lithium may be precipitated on a rear surface of the first anode active material layer 22a, e.g., between the anode electrode current collector 21 and the first anode active material layer 22a, thus forming a metal layer corresponding to the second anode active material layer by the precipitated lithium. The second anode active material layer may be a metal layer including lithium (i.e., metallic lithium) as a major component. This may be attributed to, for example, the fact that the anode active material in the first anode active material layer 22a includes a material capable of forming an alloy or compound with lithium. During discharge, lithium in the first anode active material layer 22a and the second anode active material layer, e.g., a lithium metal layer, may be ionized and then move towards the cathode layer 10. Accordingly, lithium may be utilized as an anode active material in the all-solid secondary battery 1. Also, because the first anode active material layer 22a coats the second anode active material layer, the first anode active material layer 22a may serve as a protecting layer of the second anode active material layer and at the same time suppress or reduce precipitation and growth of lithium dendrites. Thus, a short-circuit and/or reduction in capacity of the all-solid secondary battery 1 may be suppressed or reduced, and consequently cycle characteristics of the all-solid secondary battery 1 may be improved. Also, when the second anode active material layer is provided through charging after assembly of the all-solid secondary battery 1, the anode current collector 21, the first anode active material layer 22a, and a region therebetween may be, for example, Li-free regions that do not include lithium (Li) in an initial state or a discharged state of the all-solid secondary battery 1.

### Anode layer: Third anode active material layer

In the all-solid secondary battery 1 according to an embodiment, the anode layer 20 may include an anode current collector 21 and a third anode active material layer 22b on the anode current collector 21.

The third anode active material layer 22b may be a metal layer including lithium or a lithium alloy. The metal layer may include lithium or a lithium alloy. Accordingly, because the third anode active material layer 22b is a metal layer including lithium, the third anode active material layer 22b may serve as, for example, a lithium reservoir. The lithium alloy may be, for example, a Li-AI alloy, a Li-Sn alloy, a Li-In alloy, a Li-Ag alloy, a Li-Au alloy, a Li-Zn alloy, a Li-Ge alloy, or a Li-Si alloy, but embodiments are not limited thereto, and any material available as a lithium alloy in the art may be utilized. The second anode active material layer 22b may be formed of one of these alloys or lithium or may be formed of one or more suitable alloys.

A thickness of the second anode active material layer 22b may be, for example, in a range of about 1 µm to about 100 µm, about 1 µm to about 50 µm, about 1 µm to about 30 µm, about 1 µm to about 15 µm, about 1 µm to about 10 µm, or about 3 µm to about 7 µm, but embodiments are not limited thereto. When the thickness of the third anode active material layer 22b is within these ranges, the third anode active material layer 22b may well serve as a lithium reservoir, and cycle characteristics of the all-solid secondary battery 1 may be excellent or suitable without an increase in weight and volume. The third anode active material layer 22b may be, for example, a metal deposition layer or a metal foil having a thickness within these ranges.

In some embodiments, a lithium halide layer 24 may be additionally arranged on the third anode active material layer 22b. The lithium halide layer 24 may serve as a passivation layer and thus may prevent or reduce deterioration of the third anode active material layer 22b. Because the lithium halide layer 24 is a high strength layer and a high hardness layer, the lithium halide layer 24 may be a protecting layer that protects the third anode active material layer 22b. The lithium halide layer 24 may include at least one selected from LiF, LiCI, LiBr, and Lil, and, for example, the lithium halide layer 24 may be a LiF layer. The lithium halide layer 24 may be arranged on the third anode active material layer 22b through deposition. A thickness of the lithium halide layer 24 may be, for example, in a range of about 10 µm to about 300 µm, about 10 µm to about 150 µm, about 10 µm to about 90 µm, about 10 µm to about 60 µm, or about 20 µm to about 50 µm, but embodiments are not limited thereto. When the thickness of the lithium halide layer 24 is within these ranges, the lithium halide layer 24 may prevent or reduce deterioration of the third anode active material layer 22b, and an energy density of the all-solid secondary battery 1 may be improved.

In some embodiments, a carbon layer 25 may be additionally arranged between the first anode active material layer 22a and the second solid electrolyte layer 23 shown in FIG. 4 or between the third anode active material layer 22b and the second solid electrolyte layer 23 shown in FIG. 5. As shown in FIG. 5, the carbon layer 25 may be between the lithium halide layer 24 and the second solid electrolyte layer 23.

A thickness of the carbon layer 25 may be, for example, in a range of about 1 µm to about 10 µm, about 2 µm to about 10 µm, or about 1 µm to about 5 µm. When the thickness of the carbon layer 25 is within these ranges, interfacial resistance may be effectively reduced, and an energy density of the all-solid secondary battery 1 may be improved. The carbon layer 25 may include a binder and a carbonaceous material. The carbonaceous material may be or include amorphous carbon or crystalline carbon. The binder may be or include the binder utilized in the cathode layer 10 described above. The carbon layer 25 may be or include both (e.g., simultaneously) amorphous carbon and crystalline carbon. A weight ratio of amorphous carbon to crystalline carbon in the carbon layer 25 may be, for example, in a range of about 4:6 to about 6:4.

### Anode layer: Anode current collector

For example, the anode current collector 21 may be formed of a material that can react with lithium to form an alloy or a compound. Examples of the material of the anode current collector 21 may include copper (Cu), stainless steel, titanium (Ti), iron (Fe), cobalt (Co), and nickel (Ni), but embodiments are not limited thereto, and any material available as an electrode current collector in the art may be utilized. The anode current collector 21 may be formed of one of the examples of the metal or an alloy or a coating material of at least two metals selected from the examples. The anode current collector 21 may be, for example, in the form of a plate or a foil.

The all-solid secondary battery 1 may further include a thin film on the anode current collector 21, the thin film including an element alloyable with lithium. The thin film may be provided between the anode current collector 21 and the first anode active material layer 22a. The thin film may include, for example, an element alloyable with lithium. Examples of the element alloyable with lithium may include gold, silver, zinc, tin, indium, silicon, aluminum, and/or bismuth, but embodiments are not limited thereto, and any element alloyable with lithium in the art may be utilized. The thin film may be formed of one of these metals or an alloy of two or more metals. When the thin film is provided on the anode current collector 21, for example, the second anode active material layer precipitated between the thin film and the first anode active material layer 22a may further be planarized, and thus cycle characteristics of the all-solid secondary battery 1 may further be improved.

A thickness of the thin film may be, for example, in a range of about 1 nm to about 800 nm, about 50 nm to about 600 nm, or about 100 nm to about 500 nm. When the thickness of the thin film is within these ranges, functions of the thin film may be easily exhibited. As a result, the thin film itself absorbs lithium, and thus an amount of lithium precipitation in the anode layer 20 may be reduced, which may improve cycle characteristics of the all-solid secondary battery 1 without a decrease in an energy density of the all-solid secondary battery 1. The thin film may be on the anode current collector 21, for example, by vacuum vapor deposition, sputtering, or plating.

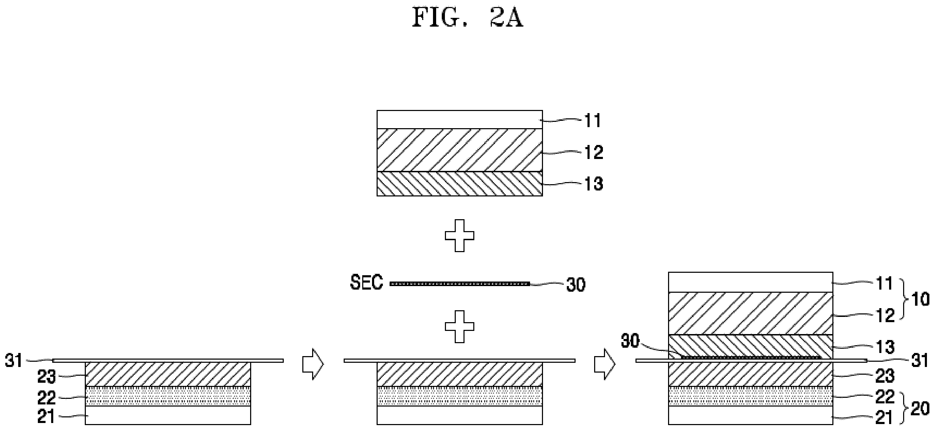

According to another embodiment, a method of preparing an all-solid secondary battery will be described with reference to FIGS. 2A and 2B.

First, as shown in FIG. 2A, an insulating member 31 is arranged on the peripheral portions of a second solid electrolyte layer 23 having an anode layer 20 (e.g., 21+22) stacked thereon, and then a composite solid electrolyte 30 is arranged on the central portion of the second solid electrolyte layer 23. Because both surfaces of the insulating member 31 (e.g., top and bottom planar surfaces) are coated with a thermoplastic adhesive film, the insulating member 31 may have excellent or suitable adhesive strength to the composite solid electrolyte 30, the second solid electrolyte layer 23, and a first solid electrolyte layer 13.

The composite solid electrolyte 30 may be prepared by coating and drying a composition including an ion conductor, a lithium salt, a binder, and an organic solvent on a substrate and heat-treating the resultant. The composition may further include an ionic liquid. The composition may be separated as a film from the substrate, and thus a composite solid electrolyte in the form of a free standing film may be obtained.

A cathode active material layer 12 is arranged on a cathode current collector 11 to prepare a cathode layer 10.

The layers are sequentially stacked in the order shown in FIG. 2A and then pressed to prepare an all-solid secondary battery. The pressing process may be performed at a pressure in a range of about 100 MPa to about 700 MPa, about 200 MPa to about 600 MPa, or about 300 MPa to about 550 MPa or a pressure of about 500 MPa, and at a temperature in a range of about 30 °C to about 95 °C, about 50 °C to about 90 °C, or about 80 °C to about 90 °C. When a pressing process is needed in preparation of an all-solid secondary battery according to an embodiment, the pressing process may be performed under these conditions.

The method of preparing an all-solid secondary battery may include coating and pressing the cathode active material layer 12 on the cathode current collector 11 and then coating and pressing the first solid electrolyte layer 13 on the cathode active material layer 12 and the cathode current collector 11 to prepare a first solid electrolyte layer 13/cathode layer 10 stack.

Separately, the method may further include coating and pressing the anode active material layer 22 on the anode current collector 21 and then coating and pressing the second solid electrolyte layer 23 on the anode active material layer 22 and the anode current collector 21 to prepare a second solid electrolyte layer 23/anode layer 20 stack.

The insulating member 31 is attached onto the second solid electrolyte layer 23 of the second solid electrolyte layer 23/anode layer 20 stack, and then the composite solid electrolyte 30 is coated on the resultant to complete a composite structure. Next, the composite solid electrolyte 30 is combined with the first solid electrolyte layer 13/cathode layer 10 stack to prepare the desired or suitable all-solid secondary battery.

In some embodiments, short-circuit occurrence by lithium dendrite may be prevented or reduced beforehand by arranging the composite solid electrolyte 30 of the composite structure to have increased contact with the first solid electrolyte layer 13 on the cathode layer 10 compared to the second solid electrolyte layer 23 on the anode layer 20.

In FIG. 2B, a length L1 of the insulating member 31 may be in a range of about 0.5 mm to about 1.5 mm or about 0.5 mm to about 1.2 mm, and a length L2 of the insulating member 31 may be in a range of about 0.5 mm to about 3.0 mm. When the lengths L1 and L2 are within these ranges, short-circuit occurrence may be effectively suppressed or reduced without a decrease in capacity of a cathode. When the length L1 is longer than these ranges, the insulating member 31 may invade a region of the cathode, and thus capacity of the battery may decrease.

The characteristics of the all-solid secondary battery may vary according to the length L1 of the insulating member 31. When the length L1 increases, a physical short-circuit of the all-solid secondary battery 1 may decrease, and cell stability of the all-solid secondary battery 1 may increase. However, capacity of the cathode may decrease as the insulating member 31 invades the region of the cathode. The length L1 may be small or suitably controlled to reduce decrease in capacity of the cathode. When the length L1 is 0 mm, decrease in capacity of the cathode may not occur, but a physical short-circuit may not be prevented or reduced. Therefore, the lengths L1 and L2 need to be optimized in terms of preventing or reducing decrease in capacity of the cathode and/or a physical short-circuit.

One or more embodiments will now be described in more detail with reference to examples.

### Example 1

### Preparation of anode layer

A stainless steel (SUS) foil having a thickness of about 10 µm was prepared as an anode current collector. Also, carbon black (CB) having a primary particle diameter of about 30 nm and silver (Ag) particles having an average particle diameter of about 60 nm were prepared as an anode active material.

0.25 g of a mixture powder prepared by mixing the carbon black (CB) and silver (Ag) particles at a weight ratio of 3:1 was put into a container, and 2 g of an NMP solution including about 7 weight% (wt%) of a PVDF binder (#9300 available from Kureha Co.) was added to the container to prepare a mixture solution. Next, while gradually adding NMP to the mixture solution, the mixture solution was stirred to prepare a slurry. Thus prepared slurry was applied to the SUS foil utilizing a bar coater and dried in a convection oven at about 80 °C for about 10 minutes to obtain a stack. The stack was vacuum-dried at a temperature of about 40 °C for about 10 hours. Through these processes, an anode layer including a first anode active material layer prepared on an anode current collector was prepared.

### Preparation of solid electrolyte layer

An acryl-based binder (SX-A334, Zeon Co., Ltd.) was added to octyl acetate to prepare a 4 wt% binder solution. The acyl-based binder solution was added to a Li₆PS₅Cl solid electrolyte (D50=3 µm, crystalline), which was an argyrodite-type or kind crystal, and mixed utilizing a Thinky mixer to prepare a slurry. The slurry included about 1.5 parts by weight of the acryl-based binder based on 98.5 parts by weight of the solid electrolyte. The slurry was applied to non-woven fabric utilizing a bar coater and dried in a convection oven at about 80 °C for about 10 minutes to obtain a stack. The stack was vacuum-dried at a temperature of about 70 °C for about 2 hours. Through these processes, a solid electrolyte layer was prepared. The solid electrolyte layer was utilized as a first solid electrolyte layer and a second solid electrolyte layer.

### Preparation of anode layer/second solid electrolyte layer stack

The second solid electrolyte layer (SE2) was arranged on the first anode active material layer of the anode layer to prepare a stack. The stack underwent hot plate pressing at a temperature of about 90 °C and a pressure of about 500 MPa for about 10 minutes to prepare an anode layer/second solid electrolyte layer stack. Because the solid electrolyte layer was sintered by the pressing process, battery characteristics of the all-solid secondary battery were improved. A thickness of the sintered anode layer/second solid electrolyte layer stack was about 45 µm. A thickness of the pressed first anode active material layer was about 7 µm.

### Preparation of cathode layer

LiNi_{0.8}Co_{0.15}Mn_{0.05}O₂ (NCM) was prepared as a cathode active material. A Li₆PS₅Cl solid electrolyte (D50=0.6 µm, crystalline), which was an argyrodite-type or kind crystal, was utilized as a solid electrolyte. A polytetrafluoroethylene (PTFE) binder (TEFLON^{®} binder made by DuPont) was prepared as a binder. Carbon black (CB) and carbon nanofibers (CNF) (nanotubes) were prepared as a conducting agent. These materials were mixed at a weight ratio of cathode active material: solid electrolyte:carbon black:carbon nanotube:binder=85.5:10:1.5:1.5:1.5, and the mixture was added to xylene, as a solvent, to prepare a cathode active material composition. The cathode active material composition was mixed utilizing a mix grinder, kneaded utilizing a heated kneader at 80 °C, molded into a sheet form, and vacuum-dried at 40 °C for 8 hours to prepare a cathode layer including a cathode current collector and a cathode active material layer on the cathode current collector. Aluminum foil was used as the cathode current collector..

### Preparation of cathode layer/first solid electrolyte layer stack

The first solid electrolyte layer was arranged on the cathode layer to prepare a stack. The stack underwent hot plate pressing at a temperature of about 90 °C and a pressure of about 500 MPa for about 10 minutes to prepare a cathode layer/first solid electrolyte layer stack. Because the solid electrolyte layer was sintered by the pressing process, battery characteristics of the all-solid secondary battery were improved. A thickness of the sintered anode layer/second solid electrolyte layer stack was about 45 µm. A thickness of the pressed cathode active material layer was about 100 µm.

An insulating member was on the peripheral and terminal regions of an upper portion of the anode layer/second solid electrolyte layer stack. An insulating polypropylene film (having a thickness of 5 µm, available from SKI) was utilized as the insulating member. d, L1, and L2 of the insulating member were controlled or selected according to the conditions shown in Table 1.

Next, a composite solid electrolyte SEC was arranged on a central portion of the anode layer/second solid electrolyte layer stack, and the insulating member was arranged on peripheral portions of the second solid electrolyte layer to prepare a composite structure. Subsequently, the cathode layer/first solid electrolyte layer (SE1) stack was stacked on the composite structure.

The stack thus prepared through these processes underwent plate pressing at a temperature of about 90 °C and a pressure of about 500 MPa for about 1 minute. After the pressing process, blanking was performed on the resultant, and one terminal was attached to the current collectors, respectively, thereby completing preparation of an all-solid secondary battery.

A freestanding film prepared as follows was utilized as the composite solid electrolyte.

First, 1.38 g of PVDF (Solef5130), as a binder, was dissolved in 13.4 mL of NMP, as a solvent, 0.75 g of LiTFSI, as a lithium salt, was added thereto, and then 2.07 g of PEO (600,000 g/mol) was added thereto to obtain a mixture. After stirring the mixture overnight at room temperature (25 °C), and the mixture was applied to a substrate, dried in a convection oven of about 80 °C, and vacuum-dried at 120 °C for 6 hours to obtain a composite solid electrolyte (PEO-LiTFSI (SEC) layer) of a freestanding state.

### Examples 2 to 9

All-solid secondary batteries were each prepared in substantially the same manner as in Example 1, except that conditions of the insulating member and the composite solid electrolyte SEC were changed to those shown in Table 1.

### Comparative Example 1

### Preparation of anode layer

A SUS foil having a thickness of about 10 µm was prepared as an anode current collector. Also, carbon black (CB) having a primary particle diameter of about 30 nm and silver (Ag) particles having an average particle diameter of about 60 nm were prepared as an anode active material.

0.25 g of a mixture powder prepared by mixing the carbon black (CB) and silver (Ag) particles at a weight ratio of 3:1 was put into a container, and 2 g of an NMP solution including about 7 weight% (wt%) of a PVDF binder (#9300 available from Kureha Co.) was added to the container to prepare a mixture solution. Next, while gradually adding NMP to the mixture solution, the mixture solution was stirred to prepare a slurry. The prepared slurry was applied to the SUS foil utilizing a bar coater and dried in a convection oven of about 80 °C for about 10 minutes to obtain a stack. The stack was vacuum-dried at a temperature of about 40 °C for about 10 hours. Through these processes, an anode layer including a first anode active material layer prepared on an anode current collector was prepared.

### Preparation of solid electrolyte layer

An acryl-based binder (SX-A334, Zeon Co., Ltd.) was added to octyl acetate to prepare a 4 wt% binder solution. The acyl-based binder solution was added to a Li₆PS₅Cl solid electrolyte (D50=3 µm, crystalline), which was an argyrodite-type or kind crystal, and mixed utilizing a Thinky mixer to prepare a slurry. The slurry included about 1.5 parts by weight of the acryl-based binder based on 98.5 parts by weight of the solid electrolyte. The slurry was applied to non-woven fabric utilizing a bar coater and dried in a convection oven at about 80 °C for about 10 minutes to obtain a stack. The stack was vacuum-dried at a temperature of about 70 °C for about 2 hours. Through these processes, a solid electrolyte layer was prepared.

### Preparation of cathode layer

LiNi_{0.8}Co_{0.15}Mn_{0.05}O₂ (NCM) was prepared as a cathode active material. A Li₆PS₅Cl solid electrolyte (D50=0.6 µm, crystalline), which was an argyrodite-type or kind crystal, was utilized as a solid electrolyte. A polytetrafluoroethylene (PTFE) binder (Teflon binder made by DuPont) was prepared as a binder. Carbon black (CB) and carbon nanofibers (CNF) (nanotubes) were prepared as a conductive agent. These materials were mixed at a weight ratio of cathode active material:solid electrolyte:carbon black:carbon nanotube:binder=85.5:10:1.5:1.5:1.5, and the mixture was added to xylene, as a solvent, to prepare a cathode active material composition. The cathode active material composition was mixed utilizing a mix grinder, kneaded utilizing a heated kneader at 80 °C, molded into a sheet form, and vacuum-dried at 40 °C for 8 hours to prepare a cathode layer including a cathode current collector and a cathode active material layer on the cathode current collector. Aluminum foil was used as the cathode current collector.

The solid electrolyte layer was arranged on the cathode layer and pressed at a temperature of about 90 °C and a pressure of about 500 MPa for about 10 minutes, and an anode layer was arranged on the resultant to prepare a stack. The stack underwent hot plate pressing at a temperature of about 90 °C and a pressure of about 500 MPa for about 10 minutes, thereby completing preparation of an all-solid secondary battery.

### Comparative Example 2

A solid electrolyte layer SE was arranged on the cathode layer prepared in Comparative Example 1 to prepare a cathode layer/solid electrolyte layer stack. The stack underwent hot plate pressing at a temperature of about 90 °C and a pressure of about 500 MPa for about 10 minutes to prepare a cathode layer/solid electrolyte layer stack.

The anode layer prepared in Comparative Example 1 was stacked on the solid electrolyte layer of the cathode layer/solid electrolyte layer stack to prepare an all-solid secondary battery.

### Comparative Example 3

A solid electrolyte layer SE was arranged on the first anode active material layer of the anode layer of Comparative Example 1 to prepare a stack. The stack underwent hot plate pressing at a temperature of about 90 °C and a pressure of about 500 MPa for about 10 minutes to prepare an anode layer/solid electrolyte layer stack.

The cathode layer prepared in Comparative Example 1 was stacked on the solid electrolyte layer of the anode layer/solid electrolyte layer stack to prepare an all-solid secondary battery.

### Comparative Example 4

An all-solid secondary battery was prepared in substantially the same manner as in Example 1, except that a process of arranging a composite solid electrolyte SEC and an insulating member on a top surface of an upper portion of the anode layer/second solid electrolyte layer stack was omitted and the conditions were changed to those shown in Table 1.

### Comparative Example 5

An all-solid secondary battery was prepared in substantially the same manner as in Example 1, except that an insulating member (only) was arranged on peripheral portions of an upper portion of the anode layer/second solid electrolyte layer stack, and the first solid electrolyte layer/cathode layer stack was stacked thereon according to the conditions shown in Table 1.

### Comparative Example 6

An all-solid secondary battery was prepared in substantially the same manner as in Example 1, except that a composite solid electrolyte (only) was arranged on the entire top surface of an upper portion of the anode layer/second solid electrolyte layer stack, and the first solid electrolyte layer/cathode layer stack was stacked thereon according to the conditions shown in Table 1.

### Comparative Example 7

An all-solid secondary battery was prepared in substantially the same manner as in Example 1, except that a composite solid electrolyte and an insulating member were each sequentially arranged on the entire top surface of an upper portion of the anode layer/second solid electrolyte layer stack, and the first solid electrolyte layer/cathode layer stack was stacked thereon according to the conditions shown in Table 1.

**Table 1**

| Sample | Condition for cell assembly | Insulating member | | | | | SEC layer | | |
|---|---|---|---|---|---|---|---|---|---|
| | | d (µm) | L1 (mm) | L2 (mm) | Area S2 (%) | Area S3 (%) | Area S1 (%) | Thickness | EO/Li |
| Example 1 | SE2/anode | 10 | 0.5 | 0.5 | 9 | 9 | 82 | 10 | 5 |
| | SE1/cathode | | | | | | | | |
| Example 2 | SE2/anode | 10 | 0.5 | 0.5 | 9 | 9 | 82 | 10 | 15 |
| | SE1/cathode | | | | | | | | |
| Example 3 | SE2/anode | 10 | 0.5 | 0.5 | 9 | 9 | 82 | 10 | 25 |
| | SE1/cathode | | | | | | | | |
| Example 4 | SE2/anode | 5 | 0.5 | 0.5 | 9 | 9 | 82 | 5 | 5 |
| | SE1/cathode | | | | | | | | |
| Example 5 | SE2/anode | 5 | 0.5 | 0.5 | 9 | 9 | 82 | 5 | 15 |
| | SE1/cathode | | | | | | | | |
| Example 6 | SE2/anode | 5 | 0.5 | 0.5 | 9 | 9 | 82 | 5 | 25 |
| | SE1/cathode | | | | | | | | |
| Example 7 | SE2/anode | 1 | 1 | 0.5 | 17. 2 | 9.1 | 73.7 | 1 | 5 |
| | SE1/cathode | | | | | | | | |
| Example 8 | SE2/anode | 1 | 1 | 0.5 | 17. 2 | 9.1 | 73.7 | 1 | 15 |
| | SE1/cathode | | | | | | | | |
| Example 9 | SE2/anode | 1 | 1 | 0.5 | 17. 2 | 9.1 | 73.7 | 1 | 25 |
| | SE1/cathode | | | | | | | | |
| Comparative Example 1 | Anode/SE/cathode | *(Omitted)* | | | | | *(Omitted)* | | |
| Comparative Example 2 | Anode | *(Omitted)* | | | | | *(Omitted)* | | |
| | SE1/cathode | | | | | | | | |
| Comparative Example 3 | SE2/anode | *(Omitted)* | | | | | *(Omitted)* | | |
| | Cathode | | | | | | | | |
| Comparative Example 4 | SE2/anode | *(Omitted)* | | | | | *(Omitted)* | | |
| | SE1/cathode | | | | | | | | |
| Comparative Example 5 | SE2/anode | 5 | 0.5 | 0.5 | 9 | 9 | *(Omitted)* | | |
| | SE1/cathode | | | | | | | | |
| Comparative Example 6 | SE2/anode | *(Omitted)* | | | | | 100 | 5 | 5 |
| | SE1/cathode | | | | | | | | |
| Comparative Example 7 | SE2/anode | 5 | 10.5 | 0 | 100 | 0 | 100 | 5 | 5 |
| | SE1/cathode | | | | | | | | |

In Table 1, the total of S1, S2, and S3 are selected to be 100 % (e.g., except in Comparative Example 5, which omits the composite solid electrolyte, and Comparative Example 7, in which a composite solid electrolyte and an insulating member are each sequentially arranged on the entire top surface of an upper portion of the anode layer).
In Table 1, the area S1 denotes an area of the SEC layer in FIG. 3 based on the total area of the SEC layer and the insulating member, and the areas S2 and S3 respectively denote the areas S2 and S3 of the insulating member in FIG. 3 based on the total area of the SEC layer and the insulating member. Otherwise, the area S1 of FIG. 3 is based on the total area of the second solid electrolyte layer, and the areas S2 and S3 of FIG. 3 is based on the total area of the second solid electrolyte layer.

### Evaluation Example 1: Charging/discharging test

Charging/discharging characteristics of the all-solid secondary batteries prepared in Examples 1 to 9 and Comparative Examples 1 to 7 were evaluated by the following charging/discharging test. The charging/discharging test was performed by putting the all-solid secondary battery in a thermostat at 60 °C.

The battery was charged for about 10 hours with a constant current of 0.1C and a cut-off current of 0.05C until the battery voltage was 4.25 V, and then was discharged for about 10 hours with a constant current of 0.1C until the battery voltage was 2.5 V ("first cycle").

Subsequently, the battery was charged for about 10 hours with a constant current of 0.1C and a cut-off current of 0.05C until the battery voltage was 4.25 V, and then was discharged for about 3 hours with a constant current of 0.33C until the battery voltage was 2.5 V ("second cycle").

Thereafter, the battery was charged for about 10 hours with a constant current of 0.1C and a cut-off current of 0.05C until the battery voltage was 4.25 V. Then, the battery was discharged for about 1 hour with a constant current of 1.0C until the battery voltage was 2.5 V ("third cycle").

Next, the battery was charged for about 3 hours with a constant current of 0.33C and a cut-off current of 0.1C until the battery voltage was 4.25 V. Then, the battery was discharged for about 3 hours with a constant current of 0.33C until the battery voltage was 2.5 V ("fourth cycle").

The high-rate characteristic for each of the batteries was expressed as a percentage value of a discharge capacity measured at 1C with respect to a capacity at 0.33C (1 C/0.33C).

Also, occurrence of a short-circuit was evaluated for each of the batteries, and the results are shown in Table 2. A short-circuit occurring during initial charging was indicated by "o", a short-circuit occurred after the second cycle was indicated by "Δ", and no occurrence of a short-circuit was indicated by "x".

**Table 2**

| Sample | Charge/discharge test | | |
|---|---|---|---|
| | Short-circuit | Initial capacity (mAh/g) | High-rate characteristic % |
| | | | (1C/0.33C) % |
| Example 1 | X | 175.4 | 81.5 |
| Example 2 | X | 170.0 | 80.6 |
| Example 3 | X | 161.1 | 68.8 |
| Example 4 | X | 184.6 | 88.3 |
| Example 5 | X | 179.0 | 90.1 |
| Example 6 | X | 169.6 | 81.1 |
| Example 7 | X | 129.4 | 67.4 |
| Example 8 | X | 125.4 | 66.6 |
| Example 9 | X | 118.8 | 56.8 |
| Comparative Example 1 | ○ | 125.3 | Unmeasurable |
| Comparative Example 2 | ○ | 62.6 | Unmeasurable |
| Comparative Example 3 | ○ | 75.2 | Unmeasurable |
| Comparative Example 4 | ○ | 128.9 | Unmeasurable |
| Comparative Example 5 | Δ | 143.2 | Unmeasurable |
| Comparative Example 6 | ○ | 134.4 | Unmeasurable |
| Comparative Example 7 | X | 107.0 | 51.1 |

The all-solid secondary batteries of Examples 1 to 9 did not have short-circuit occurrence after the manufacture, and had excellent or suitable rate performance.

The all-solid secondary battery of Comparative Example 1 was a cell prepared by pressing and punching an anode layer/SE layer/cathode layer stack. During the punching process, physical defects occurred at the edges of the stack, an initial capacity decreased due to a short-circuit occurrence, and thus the high-rate characteristic of the battery was not able to be evaluated.

The all-solid secondary battery of Comparative Example 2 was a cell prepared by separately pressing an anode layer and a SE layer/cathode layer, punching the layers, and then stacking the layers. Because physical defects occurred at the edges of the SE layer/cathode layer, a short-circuit occurred during the initial charging, and interfacial resistance between the anode layer and the SE layer was high, which reduced an initial capacity of the battery.

The all-solid secondary battery of Comparative Example 3 was a cell prepared by separately pressing a SE layer/anode layer and a cathode layer, punching the layers, and stacking the layers. Although better than those of the all-solid secondary battery of Comparative Example 2, the all-solid secondary battery of Comparative Example 3 had increased interfacial resistance of the SE layer/cathode layer and a reduced initial discharge capacity due to physical defects at the edges of the SE layer/anode layer, and the high-rate characteristic of the battery was not able to be evaluated due to short-circuit occurrence.

The all-solid secondary battery of Comparative Example 4 was a cell prepared by separately pressing a SE layer/anode layer and a SE layer/cathode layer, punching the layers, and stacking the layers. The all-solid-state secondary battery of Comparative Example 4 had lower interfacial resistance of the SE layer/cathode layer and the interfacial resistance of the SE layer/anode layer compared to Comparative Examples 2 and 3. However, the all-solid secondary battery of Comparative Example 4 had still high interfacial resistance of the two SE layers while having reduced interfacial resistance of the SE layer/anode layer and reduced interfacial resistance of the SE layer/cathode layer, a reduced initial capacity due to a short-circuit occurred by the physical defects at the edges of the battery, and the high-rate characteristic was not able to be evaluated.

The all-solid secondary battery of Comparative Example 5 was a cell prepared by improving physical defects by applying an insulating member at the edges of the battery of Comparative Example 4. Thus, short-circuit occurrence in the all-solid secondary battery of Comparative Example 5 was reduced, but an initial capacity of the battery was not sufficient due to interfacial resistance between the two SE layers.

A short-circuit occurred in the all-solid secondary battery of Comparative Example 6, and the high-rate characteristic was not able to be evaluated. A short-circuit did not occur in the all-solid secondary battery of Comparative Example 7, but an initial capacity and a high-rate characteristic of the battery were deteriorated as compared with those of the all-solid secondary batteries of Examples 1 to 9.

According to an embodiment, an all-solid secondary battery includes a composite solid electrolyte and an insulating member, and thus a short-circuit may be prevented or reduced in the battery, and the all-solid secondary battery may have improved cycle characteristics.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

It should be understood that the embodiments described herein should be considered in a descriptive sense only and not for purposes of limitation.

## Claims

1. An all-solid secondary battery (1) comprising:
a cathode layer (10);
an anode layer (20);
a first solid electrolyte layer (13) between the cathode layer (10) and the anode layer (20) and adjacent to the cathode layer (10); and
a second solid electrolyte layer (23) between the cathode layer (10) and the anode layer (20) and adjacent to the anode layer (20),
wherein the cathode layer (10) comprises a cathode current collector (11) and a cathode active material layer (11) on the cathode current collector (11),
the anode layer (20) comprises an anode current collector (21) and an anode active material layer (22) on the anode current collector (22), and
a composite structure (40) is between the first solid electrolyte layer (13) and the second solid electrolyte layer (23), and
wherein the composite structure (40) comprises:
a composite solid electrolyte (30) that is on a central portion of the second solid electrolyte layer (23) and comprises an ion conductor and a lithium salt; and
an insulating member (31) that is on peripheral portions of the second solid electrolyte layer (23) and is around one or more outer surfaces of the composite solid electrolyte (30).

2. The all-solid secondary battery of claim 1, wherein the ion conductor of the composite solid electrolyte (30) comprises polyethylene oxide, polypropylene oxide, polyacrylonitrile, polyvinylidene fluoride-hexafluoropropylene, polyvinylidene fluoride-trichloroethylene, polymethyl methacrylate, polystyrene-acrylonitrile co-polymer, polyvinyl chloride, polyvinylpyrrolidone, polyvinyl acetate, polyethylene vinyl acetate co-polymer, or a combination thereof.

3. The all-solid secondary battery of claim 1 or 2, wherein the composite solid electrolyte (30) further comprises at least one selected from a binder and an ionic liquid.

4. The all-solid secondary battery of one of the preceding claims, wherein the lithium salt is at least one selected from LiPF₆, LiBF₄, LiCF₃SO₃, Li(CF₃SO₂)₂N, Li(CF₃SO₂)₃C, LiC₂F₅SO₃, Li(FSO₂)₂N, LiC₄F₉SO₃, LiN(SO₂CF₂CF₃)₂, LiN(CN)₂, and compounds represented by Formulae 1 to 4:

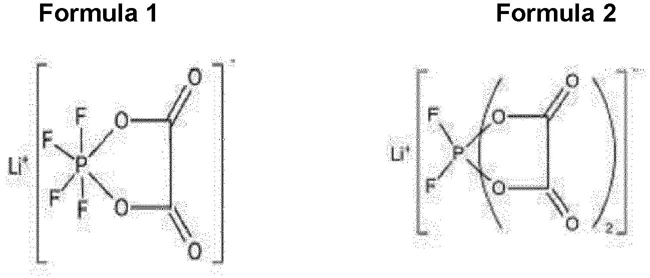

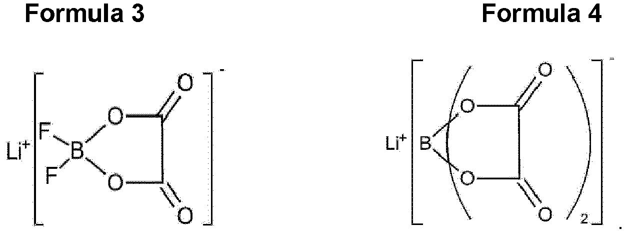

5. The all-solid secondary battery of one of the preceding claims, wherein the insulating member (31) is at least one selected from an insulating polymer and an insulating inorganic material, preferably,
wherein the insulating member (31) comprises polypropylene, acrylonitrile-butadiene rubber (NBR), styrene butadiene rubber (SBR), isobutylene isoprene rubber (IRR), chloroprene rubber, ethylene propylene diene monomer (EPDM), or a combination thereof.

6. The all-solid secondary battery of one of the preceding claims, wherein a thermoplastic adhesive coating film is located on at least one surface of the insulating member (31).

7. The all-solid secondary battery of one of the preceding claims, wherein a total area of the composite solid electrolyte (30) is in a range of 70 % to 95 % of a corresponding total area of the second solid electrolyte layer (23).

8. The all-solid secondary battery of one of the preceding claims, wherein a total exposed area of the insulating member is in a range of 5 % to 60 % of a corresponding total area of the second solid electrolyte layer (23).

9. The all-solid secondary battery of one of the preceding claims, wherein the insulating member (31) protrudes from outermost portions of the second solid electrolyte layer (23).

10. The all-solid secondary battery of one of the preceding claims, wherein a thickness of the composite solid electrolyte (30) is in a range of 1 µm to 10 µm, and a thickness of the insulating member (31) is in a range of 1 µm to 10 µm,
wherein the thickness of the composite solid electrolyte (30) is equal to or greater than that of the insulating member (31).

11. The all-solid secondary battery of one of the preceding claims, wherein the first solid electrolyte layer (13) and the second solid electrolyte layer (23) each independently comprise a sulfide-based solid electrolyte, preferably,
wherein the sulfide-based solid electrolyte is at least one selected from Li₂S-P₂S₅, Li₂S-P₂S₅-LiX (where X is a halogen), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive number, and Z is one of Ge, Zn, and Ga), Li₂S-GeS₂, Li₂S-SiS₂-Li₃PO₄, Li₂S-SiS₂-LiₚMO_{q} (where p and q are each a positive number, and M is one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2), preferably,
wherein the sulfide-based solid electrolyte is an argyrodite-type solid electrolyte comprising at least one selected from Li₆PS₅Cl, Li₆PS₅Br, and Li₆PS₅I.

12. The all-solid secondary battery of claim 1, wherein the first anode active material layer comprises an anode active material and a binder, and
wherein the anode active material is in a form of particles, and an average particle diameter of the anode active material is about 4 µm or less.

13. The all-solid secondary battery of claim 15, wherein the anode active material comprises at least one selected from a carbonaceous anode active material and a metal or metalloid anode active material, and
selected from amorphous carbon and crystalline carbon, wherein the metal or metalloid anode active material comprises at least one selected from the group consisting of gold (Au), platinum (Pt), palladium (Pd), silicon (Si), silver (Ag), aluminum (Al), bismuth (Bi), tin (Sn), and zinc (Zn), preferably,
wherein the anode active material comprises a mixture of first particles and second particles, wherein the first particles comprise amorphous carbon, and the second particles comprise a metal or metalloid, wherein an amount of the second particles is in a range of about 8 weight% (wt%) to about 60 wt% based on a total weight of the mixture.

14. The all-solid secondary battery of claim 1, further comprising a second anode active material layer between the anode current collector and the first anode active material layer, between the second solid electrolyte layer and the first anode active material layer, or both between the anode current collector and the first anode active material layer and between the second solid electrolyte layer and the first anode active material layer, and
wherein the second anode active material layer comprises lithium or a lithium alloy.

15. The all-solid secondary battery of claim 1, wherein the third anode active material layer is a metal layer comprising lithium or a lithium alloy.
